# EUROPEAN PATENT SPECIFICATION

(11) **EP 2 894 060 B1**
(45) Date of publication and mention of the grant of the patent: **10.07.2019**
(21) Application number: 12883546.9
(22) Date of filing: 03.09.2012
(51) Int. Cl.: B60N 2/427, B60N 2/68

(54) **VEHICLE SEAT**
FAHRZEUGSITZ
SIÈGE DE VÉHICULE

(43) Date of publication of application: 15.07.2015
(73) Proprietor: TS Tech Co., Ltd., Asaka-shi, Saitama 351-0012 (JP)
(72) Inventor: FUJITA, Satoshi, Shioya-gun Tochigi 329-1217 (JP); ITOI, Hiroyuki, Shioya-gun Tochigi 329-1217 (JP)
(74) Representative: Grünecker Patent- und Rechtsanwälte PartG mbB
(86) International application number: PCT/JP2012/072388
(87) International publication number: WO 2014/033963

(56) References cited:
- WO-A1-2012/077764
- JP-A- H10 272 970
- JP-A- H10 278 644
- JP-A- H10 278 644
- JP-A- H11 348 628
- JP-A- 2001 178 584
- JP-A- 2001 178 584
- JP-A- 2008 238 969
- JP-B2- 4 250 128

## Description

### Technical Field

The present invention relates to a vehicle seat, and particularly, to a vehicle seat which is not largely inclined backward when absorbing collision energy generated in the event of a rear collision or the like.

### Background Art

Generally, in the event of a so-called rear collision in which a certain vehicle hits a rear portion of a vehicle such as an automobile or a vehicle largely collides with a certain vehicle while traveling backward, an occupant who sits on a seat abruptly moves backward by the inertia force and the upper portion of the occupant is inclined backward.

In general, a seat back of a vehicle seat has a configuration in which a cushion material is placed on a metallic seat back frame and is covered by a skin material. However, since the occupant abruptly moves backward in the event of the rear collision or the like as described above, there is a case in which the deformation amount of the seat back with respect to the movement is not sufficient and hence a load applied to the occupant's body may not be efficiently reduced. Further, since a large load is applied to the seat back, there is a concern that the seat back may not be comfortable.

In order to solve such problems, Patent Document 1 discloses a technique of reducing a load applied to an occupant in a backward movement state by bending a side frame (referred to as a "side member" in Patent Document 1) when a backward load is applied to an upper portion of a seat back frame. Document JP H10 278644 A shows a seat with fragile portion formed as a through hole.

Patent Document 1: Japanese Patent No. 4200580

### DISCLOSURE OF THE INVENTION

### Problem to be Solved by the Invention

In the seat back frame disclosed in Patent Document 1, when a backward load is applied to the seat back frame with the backward movement of the occupant in the event of the rear collision or the like, the side frame is bent, and hence the collision energy generated by the backward movement of the seat back frame is absorbed. However, since the seat back frame of Patent Document 1 may not be deformed only at a limited deformation position (bent position) of the side frame, the seat back frame is bent at any point of the side frame in the up and down direction. As a result, since the bent point may not be limited, the collision energy is transmitted to the entire seat back frame, and hence the collision energy absorption efficiency is degraded. Thus, it is difficult to stably reduce the collision energy.

Therefore, the present applicant proposes a technique of absorbing collision energy by deforming a seat back frame. In this technique, a flexible constricted portion is formed in a lower frame, and the constricted portion is first bent when collision energy is applied thereto in the event of a rear collision or the like so that the collision energy is efficiently absorbed (PCT/JP 2011/078478). In this way, when the deformation position of the seat back frame is limited, the collision energy may be efficiently absorbed.

However, in the above-described technique, there has been a demand in which the ensured rigidity in the normal use state and the easiness of the deformation in the event of the impact load need to be more effectively balanced.

Further, the backward inclination angle increases too much depending on the magnitude of the applied collision energy when the seat back frame is deformed so as to be inclined backward, and hence the occupant sitting posture changes. Thus, a problem arises in that the sitting feeling may be damaged.

Thus, in the vehicle seat in which the seat back frame (the seat) is bent so as to be inclined backward when the impact load is applied thereto as described above, there has been a demand for a technique capable of ensuring the balance of the ensured rigidity in the normal use state and the easiness of the deformation in the event of the impact load and controlling the deformation amount (the backward inclination angle) of the seat back frame (the seat) by regulating the bending amount.

An object of the invention is to provide a vehicle seat which absorbs collision energy while being bent when collision energy generated in the event of a collision, that is, a rear collision is applied thereto. Specifically, the vehicle seat ensures high rigidity in a normal use state and easily reduces an impact load by deforming the seat in the event of the impact load.

Further, another object of the invention is to provide a vehicle seat which reduces an influence on an occupant sitting posture by controlling a bending amount of the seat while regulating a deformation amount (a backward inclination angle) of the seat when collision energy is applied thereto in the event of a collision, that is, a rear collision.

### Means for Solving Problem

According to the invention, the above-described problems are solved by a vehicle seat with the features of claim 1 which includes a frame side portion provided at each of right and left sides of a seat back frame and extending in the up and down direction, wherein the frame side portion is provided with a fragile portion which is deformed when an impact load is applied thereto, wherein the fragile portion includes a first fragile portion which is formed so as to extend forward from the rear end of the frame side portion and a second fragile portion which is formed at a position separated from the first fragile portion in the frame side portion, and wherein the first fragile portion extends toward the formation position of the second fragile portion.

In this way, the vehicle seat of the invention includes the fragile portion which is deformed when the impact load is applied thereto. Accordingly, when the impact load generated in the event of the rear collision or the like is applied to the vehicle seat, a portion of the vehicle seat is deformed from the fragile portion as a start point, and hence the collision energy may be absorbed.

Then, the fragile portion of the invention includes the first fragile portion and the second fragile portion, and the first fragile portion extends toward the formation position of the second fragile portion.

Accordingly, when the first fragile portion and the second fragile portion are deformed by the impact load applied thereto while the rigidity in the normal use state is ensured, a force may be efficiently transmitted between the first fragile portion and the second fragile portion.

At this time, as in an embodiment, it is preferable that the seat back frame is provided with a frame extension portion which extends inward in the right and left direction from the frame side portion, and the first fragile portion be formed across a boundary portion between the frame side portion and the frame extension portion. Then, it is preferable that a portion which is formed in the frame side portion in the first fragile portion extends forward from the boundary portion, and the frame extension portion extends inward in the right and left direction from the boundary portion.

With such a configuration, since the first fragile portion is formed across (to notch) a "so-called corner portion", the fragile portion may be efficiently deformed when the impact load is applied thereto.

Specifically, as in an embodiment, it is preferable that both the first fragile portion and the second fragile portion are penetration holes.

With such a configuration, the fragile portion may be efficiently deformed when the impact load is applied thereto.

Further, at this time, as in an embodiment, it is preferable that both the first fragile portion and the second fragile portion are formed so that both fragile portions are formed at the same position in the up and down direction.

In this way, for example, in a normal seat, the first fragile portion and the second fragile portion may be formed at the same height position from a vehicle body floor.

Thus, the deformation position of the frame side portion may be easily controlled when the impact load is applied thereto.

Further, specifically, as in an embodiment, it is preferable that the second fragile portion is a penetration hole into which the other member is inserted during the assembly of the vehicle seat.

As the penetration hole into which the other member is inserted, more specifically, as in an embodiment, it is preferable that the second fragile portion is a penetration hole into which a fixing tool for fixing the seat back frame is inserted during the assembly of the vehicle seat.

With such a configuration, there is no need to perform a special processing work for forming the second fragile portion, and hence the existing penetration hole may be used.

Thus, it is possible to decrease cost for forming the second fragile portion and also to cut the number of steps of forming the second fragile portion.

At this time, more specifically, as in an embodiment, it is preferable that each of a pair of side frames provided at both ends of the seat back frame in the right and left direction is provided with the frame side portion and the frame extension portion extending inward in the right and left direction from the frame side portion, the seat back frame may be provided with a connection frame connecting the side frames to each other, each of the ends of the connection frame in the right and left direction may overlap either one of the frame extension portion and the frame side portion provided in the side frame, and the first fragile portion may be formed so as to follow an area of the side frame which overlaps the connection frame.

With such a configuration, since the first fragile portion is formed along an area in which the connection frame overlaps the side frame, the high rigidity may be maintained in the normal use state.

Further, since the frame extension portion which constitutes the side frame normally receives (the welding end side) end of the connection frame, the frame extension portion gently extends inward so that the width in the right and left direction increases as it goes downward.

Thus, the formation position of the first fragile portion is generally a position in which the width in the right and left direction increases. For this reason, the high rigidity of the vehicle seat may be maintained in the normal use state.

Furthermore, more specifically, it is preferable that the first fragile portion is formed in consideration of the efficiency of the deformation so that the fragile portion is adjacent to the upper portion of the area overlapping the connection frame.

According to the invention the first fragile portion is a penetration hole, and an edge surrounding the penetration hole as the first fragile portion is bent.

Further, specifically, as in an embodiment, it is preferable that the penetration hole as the first fragile portion is deformed so as to be crushed in the up and down direction when an impact load is applied to the vehicle seat from the rear side, and two areas facing each other in parallel in the up and down direction in the edge contact each other when the deformation amount of the penetration hole reaches a predetermined amount so as to regulate the further deformation of the penetration hole.

In this way, when the edge surrounding the penetration hole is bent, the edges are formed at a position with the first fragile portion interposed therebetween so that the deformation amount of the first fragile portion is regulated. For this reason, when the first fragile portion is deformed to a predetermined position (shape), the facing edges contact each other, and hence the first fragile portion may be pressed and stopped so that the fragile portion is not further deformed.

Thus, the deformation amount of the first fragile portion does not become larger than a predetermined value. As a result, the deformation amount of the seat may be regulated (controlled) at a predetermined value or less.

Further, since the deformation amount of the seat is regulated so that the deformation amount does not increase too much when the impact load is applied thereto as described above, an influence on the occupant sitting posture is reduced.

Moreover, since the edge is formed by bending the periphery of the penetration hole, the edge serves as the regulation member without using a special regulation member, and hence the cost for the regulation member may be decreased.

### Effect of the Invention

According to the embodiment, since the vehicle seat includes the first fragile portion and the second fragile portion which are deformed when the impact load is applied thereto, the side frame may be deformed so that the impact of the occupant is reduced when the impact load is applied thereto.

Further, since the fragile portion is divided into the first fragile portion and the second fragile portion, the rigidity in the normal use state may be ensured. Furthermore, since the first fragile portion extends toward the formation position of the second fragile portion, a force may be efficiently transmitted between the first fragile portion and the second fragile portion when the impact load is applied to the first fragile portion and the second fragile portion so that the fragile portions are deformed.

According to the embodiment, the portion provided with the first fragile portion may be efficiently deformed when the impact load is applied thereto.

According to the embodiment, the portions provided with the first fragile portion and the second fragile portion may be efficiently deformed when the impact load is applied thereto.

According to the embodiment, the deformation position of the frame side portion may be easily controlled when the impact load is applied thereto.

According to the embodiments, the cost for forming the second fragile portion may be decreased, and the number of steps of forming the second fragile portion may be also efficiently decreased.

According to the embodiment, the high rigidity may be maintained in the normal use state.

According to the embodiments, since the deformation amount of the seat is regulated so that the deformation amount does not increase too much when the impact load is applied thereto, an influence on the occupant sitting posture is reduced.

Moreover, since the edge is formed by bending the periphery of the penetration hole, the edge serves as the regulation member without using a special regulation member, and hence the cost for the regulation member may be decreased.

### BRIEF DESCRIPTION OF THE DRAWINGS

Fig. 1 is a schematic perspective view illustrating a vehicle seat according to an embodiment of the invention;
Fig. 2 is a schematic front perspective view illustrating a seat frame according to the embodiment of the invention;
Fig. 3 is a view illustrating a lower portion of a side frame according to the embodiment of the invention;
Fig. 4 is a view illustrating a formation position of a fragile portion according to the embodiment of the invention;
Fig. 5 is a view illustrating the size of the fragile portion according to the embodiment of the invention;
Fig. 6 is a view illustrating the vicinity of the fragile portion before a rear collision;
Fig. 7 is a view illustrating the vicinity of the fragile portion after a rear collision; and
Fig. 8 is a view illustrating a function of a regulation portion according to the embodiment of the invention.

### DETAILED DESCRIPTION OF THE INVENTION

Hereinafter, an embodiment of the invention will be described with reference to the drawings. Furthermore, the members and the arrangement to be described later do not limit the invention, and may be, of course, modified into various forms according to the spirit of the invention. Further, in the specification, the conveyance indicates a carrier equipped with a seat, for example, a ground running conveyance such as an automobile and a train having vehicle wheels, and an airplane or a ship moving in a space other than a ground. Further, a normal sitting load includes a sitting impact which is generated by the sitting and an acceleration load which is generated by the sudden starting of the conveyance. Further, the collision energy which is generated in the event of the rear collision indicates the energy which is caused by a large load in the event of the rear collision, and caused by a large rear-end collision from the rear conveyance and a large collision in the backward driving state. Also, the collision energy does not include the energy which is generated by a load in a load area corresponding to the normal sitting load.

Further, the right and left direction indicates the right and left direction while the vehicle faces forward, and matches the width direction of a seat back frame 1 to be described later. Further, the front to back direction indicates the front to back direction while an occupant sits on a seat.

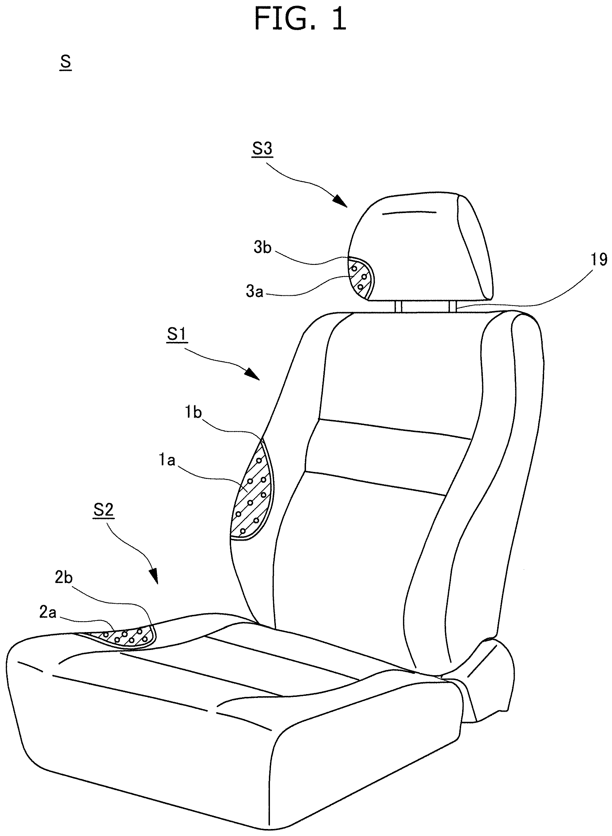

Figs. 1 to 8 are diagrams according to an embodiment of the invention, and the embodiment of the invention will be described below with reference to these drawings.

### <<Basic Configuration of Vehicle Seat S>>

A vehicle seat S according to the embodiment will be described with reference to Figs. 1 to 4.

As shown in Fig. 1, the vehicle seat S includes a seat back S1 (a back portion), a seat portion S2, and a headrest S3, and the seat back S1 (the back portion) and the seat portion S2 are formed in a manner such that cushion pads 1a and 2a are placed on a seat frame F and are covered by skin materials 1b and 2b. Furthermore, the headrest S3 is formed in a manner such that a cushion pad 3a is disposed on a core (not shown) of a head portion and is covered by a skin material 3b. Also, Reference Numeral 19 indicates a headrest pillar which supports the headrest S3.

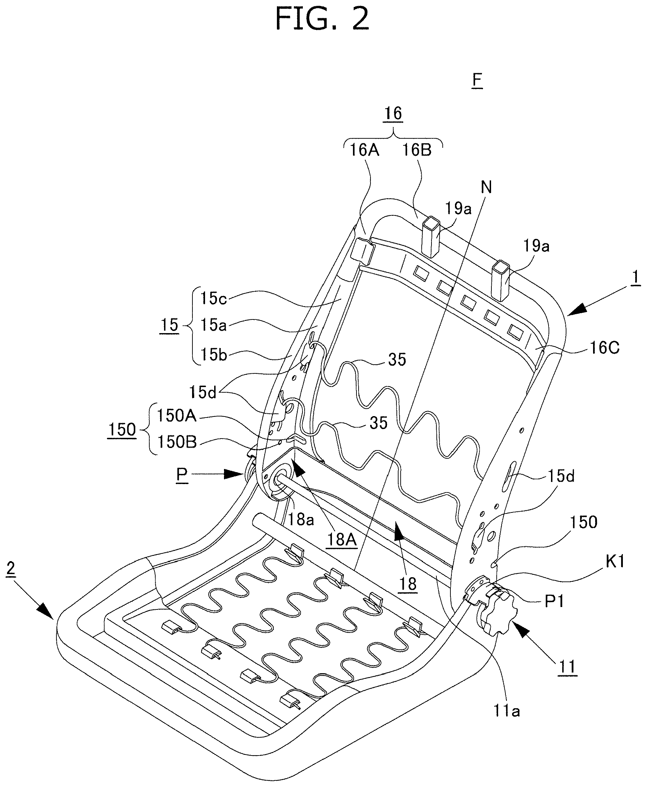

As shown in Fig. 2, the seat frame F of the vehicle seat S includes the seat back frame 1 which constitutes the seat back S1 and a seat frame 2 which constitutes the seat portion S2.

As described above, the cushion pad 2a is placed on the seat frame 2 and the seat frame is covered by the skin material 2b from the upside of the cushion pad 2a, and supports the occupant from the downside. The seat frame 2 is supported by leg portions (not shown), and inner rails (not shown) are attached to the leg portions. Thus, the seat frame is formed in a slide type in which the position thereof is adjustable forward and backward by the sliding action of the inner rails with respect to outer rails provided in a vehicle body floor.

Further, the rear end of the seat frame 2 is connected to the seat back frame 1 through a reclining mechanism 11.

The reclining mechanism 11 is configured as an existing mechanism, and includes a reclining shaft 11a which follows at least the rotation axis of the reclining mechanism 11. The reclining shaft 11a is disposed while being fitted through a communication hole, formed between a side frame side shaft penetration hole 17c provided in each of a pair of side frames 15 extending downward in the seat back frame 1 (more specifically, the pair of side frames 15) and a shaft insertion hole 11c provided in the rear end of the seat frame 2, so as to protrude from the communication hole toward the side of the seat frame F.

Further, a spiral spring P is hooked to the lower end of the seat back frame 1 bonded to the reclining mechanism 11 and the rear end of the seat frame 2 as shown in Fig. 2.

The spiral spring P biases the seat back frame 1 so as to rotate the seat back frame forward when the seat back frame 1 is in an unlocked state and the seat back S1 is inclined backward, and one end P1 is locked to a lock portion K1 provided in the seat back frame 1.

Here, the lock portion K1 is formed by, for example, a sheet metal member fixed to the side frame 15 of the seat back frame 1, and is locked while one end P1 of the spiral spring P is hooked to a portion which is bent so as to extend outward in the width direction.

Furthermore, the other end P2 of the spiral spring P is locked to a seat side lock portion K2 provided in the seat frame 2 and the seat side lock portion K2 also includes a portion which extends outward in the width direction. Then, when the other end P2 of the spiral spring P is hooked to the portion, the other end P2 of the spiral spring P is locked.

As described above, the seat back S1 has a configuration in which the cushion pad 1a is placed on the seat back frame 1 and the seat back frame is covered by the skin material 1b from the upside of the cushion pad 1a, and is used to support the back of the occupant from the rear side. In the embodiment, the seat back frame 1 is substantially formed in a rectangular frame as shown in Fig. 2, and includes the pair of side frames 15 and 15, an upper frame 16, and a connection frame 18.

Furthermore, the pair of side frames 15 corresponds to a side constituting member of embodiments.

Furthermore, the lower end of the side frame 15 and the connection frame 18 may be integrated with each other.

Since two (the pair of) side frames 15 form the width of the seat back, the side frames are disposed while being separated from each other in the right and left direction, and are disposed so as to extend in the up and down direction. Then, the upper frame 16 which connects the upper ends of the pair of side frames 15 extends upward from the side frames 15.

The upper frame 16 according to the embodiment is substantially a U-shaped member which extends upward from one side frame 15 and is bent so as to extend to the other side frame 15. In the embodiment, the upper frame is formed by bending a steel pipe.

Furthermore, the steel pipe that forms the upper frame 16 may have a closed cross-sectional shape. For example, a pipe having a circular or rectangular cross-sectional shape is used.

In the embodiment, a pipe having a circular cross-sectional shape is used.

In other words, the upper frame 16 is substantially formed in a U-shape by portions (hereinafter, referred to as "upright upper frame portions 16A") which are disposed while being separated from each other in the right and left direction so as to extend from the side frame 15 and a pillar attachment portion 16B which extends while being bent so as to connect the upper ends (at the opposite side to the arrangement side of the seat frame 2) of the upright upper frame portions 16A and 16A disposed in the right and left direction.

Then, the upright upper frame portion 16A of the upper frame 16 is disposed so that one end (the lower end opposite to the extension side of the pillar attachment portion 16B) overlaps a side plate 15a of the side frame 15 in the up and down direction, and is fixed and bonded to the side frame 15 at the overlapping portion. Furthermore, in the embodiment, the upper frame 16 is formed in a tubular member having a circular cross-sectional shape, but a tubular member having a rectangular cross-sectional shape may be also used.

Further, an upper connection frame 16C is attached so as to connect the positions slightly lower than the center portions of the upright upper frame portions 16A and 16A.

Moreover, the headrest S3 is disposed above the upper frame 16. As described above, the headrest S3 is formed in a manner such that the cushion pad 3a is provided in the outer peripheral portion of the core (not shown) and the outer periphery of the cushion pad 3a is covered by the skin material 3b.

Then, a pillar support portion 19a is disposed in the upper frame 16. A headrest pillar 19 (see Fig. 1) which supports the headrest S3 is attached to the pillar support portion 19a through a guide lock (not shown), and the headrest S3 is attached thereto. Furthermore, in the embodiment, an example is described in which the seat back S1 and the headrest S3 are formed as separate members, but a bucket type seat may be used in which the seat back S1 is integrated with the headrest S3.

As shown in Fig. 2, the side frame 15 which forms a portion of the seat back frame 1 is an extension member that forms the side surface of the seat back frame 1, and includes a side plate 15a which has a flat plate shape, a front edge 15b which is bent inward in a U-shape from the front end (the end located at the front side of the conveyance) of the side plate 15a and is turned back, and a rear edge 15c which is bent inward in an L-shape from the rear end.

The side plate 15a corresponds to a "frame side portion" of embodiments, and the rear edge 15c corresponds to a "frame extension portion" of embodiments.

The front edge 15b of the embodiment is provided with a protrusion portion 15d which protrudes toward the rear edge 15c, and the protrusion portion 15d is provided with a locking hole for locking a tension coil spring 35.

The lower portions of the side frames 15 (the lower portions of the side plates 15a) are connected to each other by the connection frame 18.

The connection frame 18 (the member center) is formed as a bridge which connects the lower portions of the pair of side frames 15 (the lower portions of the side plates 15a) disposed while being separated from each other in the right and left direction.

Both ends of the connection frame 18 are respectively bent by about 90° in the same direction (the bent extension portions will be referred to as "bent welding portions 18A").

The connection frame 18 is disposed so that the bent portion formed at each of both ends thereof follow the corner formed by the side plate 15a (the lower portion) and the rear edge 15c (the lower portion). Then, in this state, the bent welding portions 18A and 18A are welded and fixed to the inner walls (the surfaces facing the inside of the seat) of the lower portions of the side plates 15a and 15a.

Furthermore, a reclining shaft penetration hole 18a is disposed at a position where the reclining shaft 11a is disposed while the connection frame 18 is welded to the side plates 15a and 15a at the bent welding portions 18A so as not to cause any problem in arrangement.

Furthermore, the rear edge 15c of the embodiment gently extends inward so as to receive (so as to reinforce) the welding side end of the connection frame 18.

That is, the rear edge 15c is formed so that the width in the right and left direction increases as it goes downward.

With such a configuration, the bonding rigidity of the connection frame 18 is improved.

Furthermore, the seat back frame 1 of the embodiment has been described by an example in which the side frame 15 (the lower portion of the side plate 15a) and the lower frame installation portion 18 are respectively formed as separate members, but the side frame and the lower frame installation portion may be integrated with each other.

Further, the lower portion of the side frame 15 (the lower portion of the side plate 15a) is provided with the side frame side shaft penetration hole 17c through which the reclining shaft 11a is inserted, and the seat frame 2 is disposed at the lower portion through the reclining mechanism 11.

Furthermore, in the embodiment, the side plate 15a of the side frame 15 is formed as one plate.

The invention is not limited thereto, and the side portion of the seat back frame may be divided into the side frame and the lower frame base connected to the lower end of the side frame. However, when these components are integrated with each other as in this example, the number of components may be decreased, and hence the cost may be decreased.

Moreover, the side frames 15 and 15 which are disposed in the right and left direction are respectively provided with fragile portions 150 and 150 which are deformed when a collision load is applied thereto.

Furthermore, the fragile portion 150 is formed by a hole portion, a concave portion, or the like.

In the embodiment, the fragile portions 150 and 150 are formed at the same height positions with respect to the horizontal plane.

Hereinafter, the configuration and the function of the fragile portion 150 will be described.

### (Fragile Portion 150)

The vehicle seat S of the invention is provided with the fragile portion (the fragile portion 150 to be described later) which is deformed when a collision load is applied thereto.

Hereinafter, a configuration will be described in which the fragile portions 150 and 150 are respectively formed at the lower sides of the side frames 15 and 15.

Furthermore, in the specification, the "fragile portion" indicates a portion which is weak and is deformed when a predetermined value or more of a collision load generated in the event of the rear collision is applied to the fragile portion, and is formed by a hole portion, a concave portion, or the like.

In the embodiment, the fragile portions 150 and 150 are formed at the same height positions with respect to the horizontal plane.

That is, in the embodiment, the distance between the connection portion (the position of the side frame side shaft penetration hole 17c) connecting one side frame 15 to the reclining shaft 11a and the position of the fragile portion 150 formed at the lower portion of one side frame 15 is set to be equal to the distance between the connection portion (the position of the side frame side shaft penetration hole 17c) connecting the other side frame 15 to the reclining shaft 11a and the position of the fragile portion 150 formed at the lower portion of the other side frame 15.

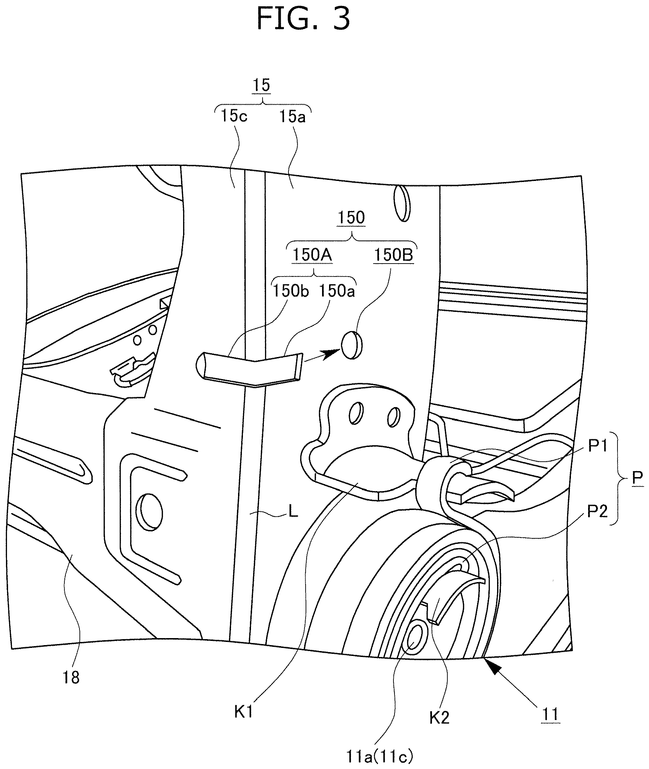

In other words, in the embodiment, the fragile portions 150 and 150 are respectively formed at the symmetrical positions with respect to the center line N extending in the up and down direction of the seat back frame 1 (see Fig. 3).

With such a configuration, there is an effect that the deformation positions of the side frames 15 and 15 may be easily controlled when a collision load is applied thereto, and hence the side frames may be appropriately applied to the vehicle seat.

However, the invention is not limited thereto, and the fragile portions may be formed at any position without departing from the spirit of the invention as long as the fragile portions are formed at the lower portions of the side frames 15 and 15.

Furthermore, as shown in Fig. 3, in the embodiment, the fragile portions 150 and 150 are respectively formed at the lower portions of the side frames 15 and 15. However, since both the right and left fragile portions have the same configuration, only one fragile portion will be described as an example.

First, the formation position of the fragile portion 150 will be described.

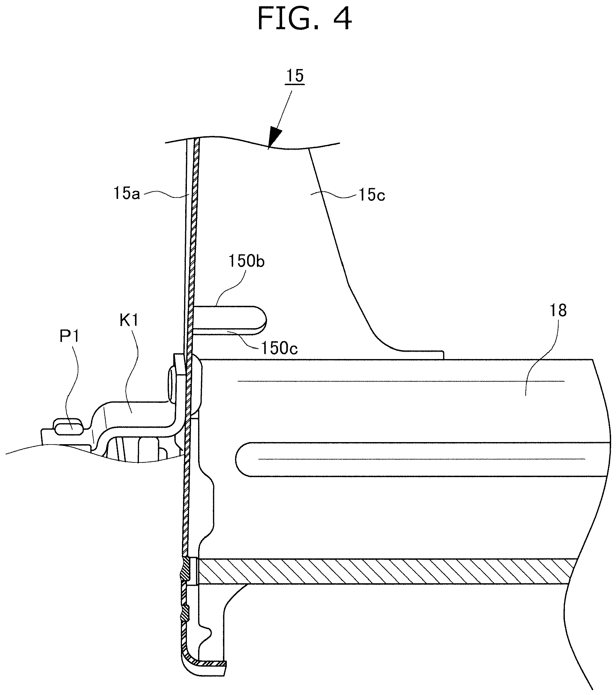

As shown in Figs. 3 and 4, a first fragile portion 150A according to the embodiment is formed at a position close to the upper portion in relation to the welding connection point between the side plate 15a and the bent welding portion 18A constituting the connection frame 18.

That is, the fragile portion 150 is formed along the upper portion of the welding connection point between the bent welding portion 18A and the side plate 15a.

Further, the fragile portion 150 is formed at the upper position in relation to the arrangement position of the lock portion K1 for locking one end P1 of the spiral spring P.

That is, the fragile portion 150 is formed above the lock portion K1 and the welding connection point between the bent welding portion 18A and the side plate 15a, and is formed at a position adjacent to (following) these positions.

Furthermore, as described above, since the rear edge 15c receives (reinforces) the welding side end of the connection frame 18, the rear edge gently extends inward so that the width in the right and left direction increases as it goes downward.

Thus, the formation position of the fragile portion 150 is a position where the width of the rear edge 15c in the right and left direction increases. For this reason, the high rigidity of the vehicle seat S in the normal use state may be maintained.

The fragile portion 150 according to the embodiment includes the first fragile portion 150A and the second fragile portion 150B.

The first fragile portion 150A is an elongated hole which is formed by notching the inner corner formed by the side plate 15a (the lower portion) and the rear edge 15c (the lower portion).

That is, the first fragile portion 150A is formed across (to notch) a boundary portion (hereinafter, referred to as a "boundary portion L") between the side plate 15a (the lower portion) and the rear edge 15c (the lower portion), and is substantially formed as an oval elongated hole which has the longest axis in the right and left direction.

A portion which is formed in the side wall 15a in the first fragile portion 150A extends from the boundary portion L (hereinafter, the portion will be referred to as a "side surface side extension portion 150a"), and a portion which is formed in the rear edge 15c extends from the boundary portion L inward in the right and left direction (hereinafter, the portion will be referred to as a "rear surface side extension portion 150b").

Then, the edge of the first fragile portion 150A is bent inward so that a flange-shaped portion is formed.

Hereinafter, the flange-shaped portion which is formed by bending the lower edge of the first fragile portion 150A will be referred to as a "lower regulation portion 150c", the flange-shaped portion which is formed by bending the upper edge thereof will be referred to as an "upper regulation portion 150d", and the flange-shaped portions which are formed by bending both edges thereof will be respectively referred to as "side regulation portions 150e".

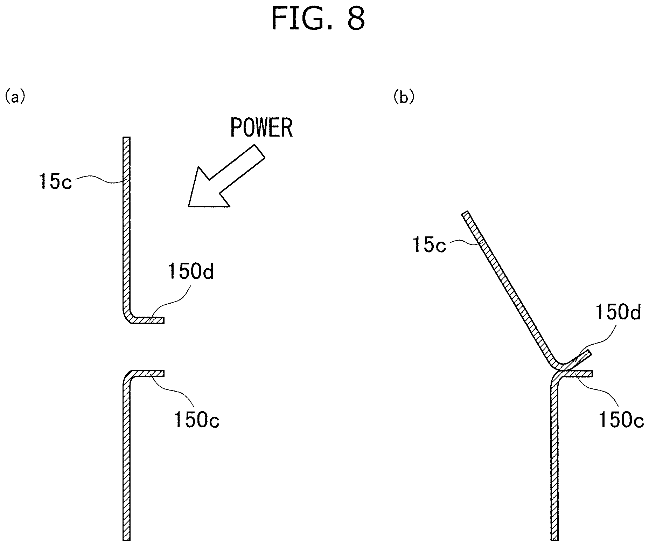

When an impact load generated in the event of the rear collision or the like is applied to the seat back frame 1, the first fragile portion 150A is crushed in the up and down direction, and the upper portion (specifically, the upper portion in relation to the formation position of the first fragile portion 150A) of the side frame 15 is bent backward. However, as shown in Fig. 8, the lower regulation portion 150c and the upper regulation portion 150d may be provided so that the crushed amount of the first fragile portion 150A (that is, the backward inclination angle of the side frame 15) does not increase by a predetermined value or more.

That is, the lower regulation portion 150c and the upper regulation portion 150d which make a pair and face each other with the first fragile portion 150A interposed therebetween are disposed as below. When the bending degree of the first fragile portion 150A provided in the side frame 15 increases, the lower regulation portion 150c and the upper regulation portion 150d contact each other, and the upper regulation portion 150d provided at the upper side is pressed and stopped by the lower regulation portion 150c provided at the lower side.

At this time, specifically, the lower regulation portion 150c and the upper regulation portion 150d easily contact each other as the areas thereof increase when the first fragile portion 150A is bent. For this reason, the deformation amount (the backward inclination amount) of the seat back frame 1 may be regulated.

In the embodiment, an example has been described in which a flat contact surface is formed in either one of the lower regulation portion 150c and the upper regulation portion 150d, but the nodal surface of at least one of these may be formed in a flat shape.

That is, the nodal surface which is formed in at least one of the lower regulation portion 150c and the upper regulation portion 150d is formed in a flat shape.

In this way, since the nodal surface of at least one of the lower regulation portion 150c and the upper regulation portion 150d is formed in a flat shape, these regulation portions may easily contact each other when the first fragile portion 150A is bent. As a result, the bending amount of the first fragile portion 150A is limited, and hence the deformation amount of the side frame 15 does not become larger than a specified value.

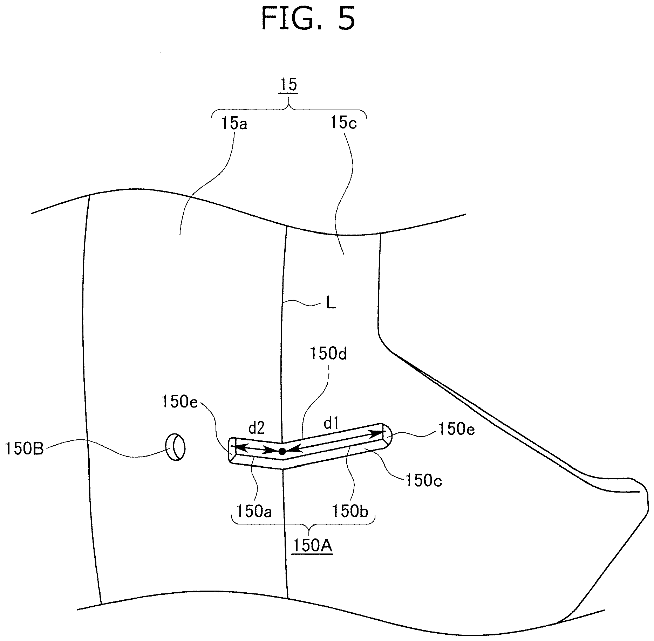

Further, as shown in Fig. 5, in the first fragile portion 150A according to the embodiment, a relation of d1 > d2 is established when the distance in the length direction (the distance in the right and left direction) of the rear surface side extension portion 150b is indicated by d1 and the distance in the length direction (the distance in the front to back direction) of the side surface side extension portion 150a is indicated by d2.

This is because the second fragile portion 150B to be described later is formed on the extension line of the side surface side extension portion 150a. For this reason, the side of the side surface side extension portion 150a (the side of the side plate 15a) may be bent while being assisted by the second fragile portion 150B. Thus, this configuration in which the side surface side extension portion 150a is notched by a small amount is devised in consideration of the rigidity in a normal use and the deformation balance in the event of a load.

Furthermore, in the embodiment, the first fragile portion 150A is formed as the penetration hole, but the invention is not limited thereto. For example, the fragile portion may be formed as a concave portion (a groove) which substantially has a semi-circular-arc cross-sectional shape and is recessed forward.

In this case, the inner wall of the concave portion may serve as the regulation portions (the side regulation portion 150e, the upper regulation portion 150d, and the lower regulation portion 150c).

Further, when the first fragile portion 150A is formed as the concave portion (the groove), the penetration hole may be formed only at a position exceeding the boundary portion L, and hence a force generated in the event of the load may be effectively transmitted.

Further, in the embodiment, the second fragile portion 150B may be formed as a hole in the side plate 15a.

The second fragile portion 150B is formed at a position separated from the first fragile portion 150A in the side plate 15a (that is, the second fragile portion is not continuous to the first fragile portion 150A), but the position is formed on the extension line of the side surface side extension portion 150a constituting the first fragile portion 150A.

In other words, the side surface side extension portion 150a which constitutes the first fragile portion 150A is formed so as to extend toward the formation position of the second fragile portion 150B (see the arrow of Fig. 3).

This improves the efficiency in the transmission of the force between the first fragile portion 150A and the second fragile portion 150B.

Further, the penetration hole into which the other member is inserted during the assembly of the vehicle seat S is used as the second fragile portion 150B.

Specifically, the second fragile portion 150B is the penetration hole into which a fixing tool for fixing the seat back frame 1 is inserted during the assembly of the vehicle seat S.

In this way, in the embodiment, the second fragile portion 150B is formed without performing a special processing work.

Then, as described above, the side surface side extension portion 150a which constitutes the first fragile portion 150A is punched so as to extend toward the second fragile portion 150B.

Thus, since a special processing work is suppressed as minimal as possible, the cost may be decreased and the workability is also improved.

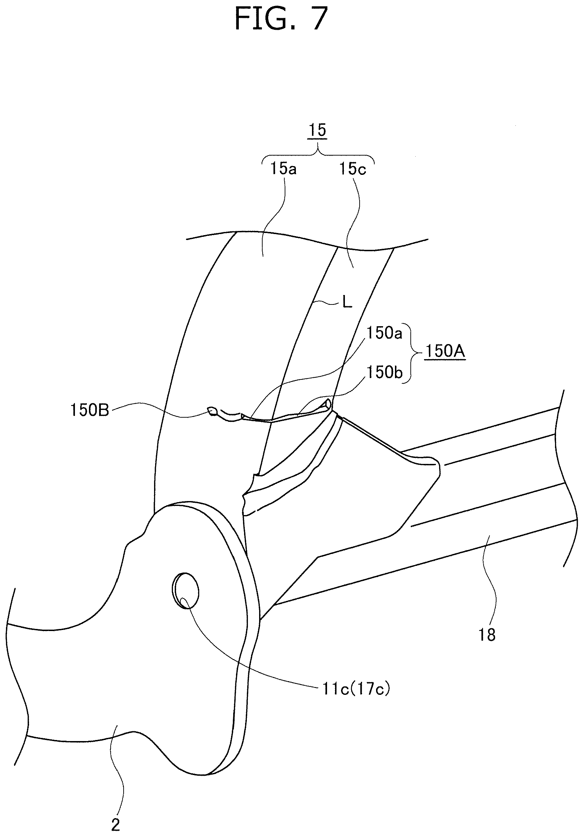

The first fragile portion 150A and the second fragile portion 150B may be bent when a predetermined impact load (an impact load larger than the normal sitting load) is applied to the seat back frame 1 in the event of the rear collision or the like, and is deformed so as to be crushed in the up and down direction (see Figs. 7 and 8). As a result, the backward inclination load may be stably and efficiently absorbed.

When the occupant abruptly moves backward in the event of the rear collision or the like, the first fragile portion 150A and the second fragile portion 150B are crushed in the up and down direction while receiving the impact load. In this way, when the first fragile portion 150A and the second fragile portion 150B are pressed, the side frame 15 is deformed so that the upper portion (specifically, the upper portion in relation to the formation positions of the first fragile portion 150A and the second fragile portion 150B) is bent toward the rear side of the vehicle, and hence the side frame 15 is inclined backward with the deformation.

Furthermore, if the strength that may withstand the normal sitting load is ensured, only the thickness of the portion forming the first fragile portion 150A and the second fragile portion 150B may be thinned in order to easily deform the first fragile portion 150A and the second fragile portion 150B.

### (Operation and Effect of Side Frame 15)

A state where the side frame 15 is deformed by the impact load generated in the event of the rear collision will be described with reference to the drawings.

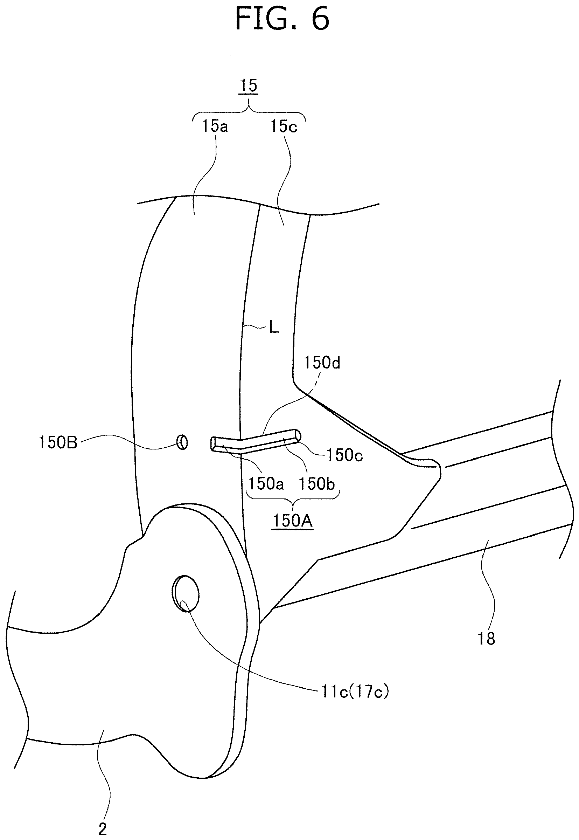

Fig. 6 illustrates the normal state and Fig. 7 illustrates the deformation state where the impact load generated in the event of the rear collision is applied to the side frame 15. In the event of the rear collision, a load is applied to the seat back frame 1 in a direction in which the seat back frame is mainly inclined backward.

Then, as shown in Fig. 7, when a load is transmitted to the side frame 15, the fragile portion 150 formed therein is deformed so as to be crushed in the up and down direction. As a result, the upper portion (specifically, the upper portion in relation to the formation position of the fragile portion 150) of the side frame 15 is inclined backward, and the seat back frame 1 is deformed.

Then, when the fragile portion 150 is bent as described above, the excessively large bending amount of the fragile portion 150 is regulated by the upper regulation portion 150d and the lower regulation portion 150c provided in the first fragile portion 150A (see Fig. 8) .

That is, when the impact load generated in the event of the rear collision is exerted as indicated by the white arrow of Fig. 8, the fragile portion 150 is bent so as to be crushed in the up and down direction, and the side frame 15 (further, the seat back frame 1) is inclined backward. However, when the fragile portion 150 (the first fragile portion 150A) is bent to a predetermined range, the upper regulation portion 150d and the lower regulation portion 150c contact each other, and hence the bending amount of the fragile portion 150 (the first fragile portion 150A) is regulated. Thus, since the upper regulation portion 150d and the lower regulation portion 150c are provided, the backward inclination amount may be appropriately set without increasing the backward inclination amount of the seat back frame 1 too much.

Moreover, the first fragile portion 150A is provided with the side regulation portion 150e, and the side regulation portion 150e resists a crushing force at both ends of the first fragile portion 150A in the horizontal direction.

Thus, the side regulation portion 150e is also used to regulate a problem in which the bending amount of the fragile portion 150 increases too much.

Further, even in the normal use state, the rigidity in the vicinity of the first fragile portion 150A may be improved.

### Reference Numerals

- S: vehicle seat
- S1: seat back
- S2: seat portion
- S3: headrest
- F: seat frame
- 1: seat back frame
- 1a, 2a, 3a: cushion pad
- 1b, 2b, 3b: skin material
- 11: reclining mechanism
- 11a: reclining shaft
- 11c: shaft insertion hole
- K1: lock portion
- K2: seat side lock portion
- P: spiral spring
- P1: one end
- P2: other end
- 15: side frame
- 15a: side plate (frame side portion)
- 15b: front edge
- 15c: rear edge (frame extension portion)
- 15d: protrusion portion
- 150: fragile portion
- 150A: first fragile portion
- 150a: side surface side extension portion
- 150b: rear surface side extension portion
- 150c: lower regulation portion
- 150d: upper regulation portion
- 150e: side regulation portion
- 150B: second fragile portion
- 16: upper frame (side constituting member)
- 16A: upright upper frame portion
- 16B: pillar attachment portion
- 17c: side frame side shaft penetration hole
- 18: connection frame
- 18A: bent welding portion
- 18a: reclining shaft penetration hole
- 19: headrest pillar
- 19a: pillar support portion
- 35: tension coil spring
- 2: seat frame
- N: center line
- L: boundary portion

## Claims

1. A vehicle seat (S) which comprises a frame side portion provided at each of right and left sides of a seat back frame (1) and extending in an up and down direction,
wherein the frame side portion is provided with a fragile portion (150) which is deformed when an impact load is applied thereto,
wherein the fragile portion (150) comprises a first fragile portion (150A) which is formed to extend forward from the rear end of the frame side portion and a second fragile portion (150B) which is formed at a position separated from the first fragile portion (150A) in the frame side portion, and
wherein the first fragile portion (150A) extends toward the formation position of the second fragile portion (150B) wherein the first fragile portion (150A) is a penetration hole, **characterized in that** an edge surrounding the penetration hole as the first fragile portion (150A) is bent inward so that a flange-shaped portion is formed.

2. The vehicle seat (S) according to claim 1,
wherein the seat back frame (1) is provided with a frame extension portion which extends inward in a right and left direction from the frame side portion,
wherein the first fragile portion (150A) is formed across a boundary portion between the frame side portion and the frame extension portion, and
wherein a portion which is formed in the frame side portion of the first fragile portion (150A) extends forward from the boundary portion (L), and a portion which is formed in the frame extension portion of the first fragile portion extends inward in the right and left direction from the boundary portion (L).

3. The vehicle seat according to claim 1 or 2, wherein both the first fragile portion (150A) and the second fragile portion (150B) are penetration holes.

4. The vehicle seat according to any one of claims 1 to 3, wherein both the first fragile portion (150A) and the second fragile portion (150B) are formed so that both fragile portions are formed at a same position in the up and down directions.

5. The vehicle seat according to any one of claims 1 to 4, wherein the second fragile portion (150B) is a penetration hole into which the other member is inserted during the assembly of the vehicle seat(S).

6. The vehicle seat according to claim 5, wherein the second fragile portion (150B) is a penetration hole into which a fixing tool for fixing the seat back from (1) is inserted during the assembly of the vehicle seat (S).

7. The vehicle seat according to any one of claims 1 to 6, wherein each of a pair of side frames provided at both ends of the seat back frame (1) in the right and left direction is provided with the frame side portion and the frame extension portion extending inward in the right and left direction from the frame side portion, wherein the seat back frame (1) is provided with a connection frame (18) connecting the side frames to each other,
wherein each of the ends of the connection frame (18) in the right and left direction overlaps either one of the frame extension portion and the frame side portion provided in the side frame, and
wherein the first fragile portion (150A) is formed to follow an area of the side frame which overlaps the connection frame.

8. The vehicle seat according to, any one of claims 1 to 7 wherein the penetration hole as the first fragile portion (150A) is deformed to be crushed in the up and down direction when an impact load is applied to the vehicle seat(S) from the rear side, and
wherein two areas facing each other in parallel in the up and down direction in the edge contact each other when the deformation amount of the penetration hole reaches a predetermined amount to regulate the further deformation of the penetration hole.

## Patentansprüche

1. Fahrzeugsitz (S), der einen Rahmen-Seitenabschnitt umfasst, der sich jeweils an der rechten und der linken Seite eines Sitzlehnen-Rahmens (1) befindet und sich in einer vertikalen Richtung erstreckt,
wobei der Rahmen-Seitenabschnitt mit einem nachgebenden Abschnitt (51) versehen ist, der verformt wird, wenn eine Stoßlast darauf wirkt,
wobei der nachgebende Abschnitt (150) einen ersten nachgebenden Abschnitt (150A), der so ausgebildet ist, dass er sich von dem hinteren Ende des Rahmen-Seitenabschnitts nach vorn erstreckt, sowie einen zweiten nachgebenden Abschnitt (150B) umfasst, der an einer von dem ersten nachgebenden Abschnitt (150A) getrennten Position in dem Rahmen-Seitenabschnitt ausgebildet ist, und
der erste nachgebende Abschnitt (150A) sich auf die Ausbildungs-Position des zweiten nachgebenden Abschnitts (150B) zu erstreckt, und der erste nachgebende Abschnitt (150A) ein Einführungs-Loch ist,
**dadurch gekennzeichnet, dass** ein Rand, der das Einführungs-Loch als den ersten nachgebenden Abschnitt (150A) umgibt, so nach innen gebogen ist, dass ein flanschförmiger Abschnitt gebildet wird.

2. Fahrzeugsitz (S) nach Anspruch 1,
wobei der Sitzlehnen-Rahmen (1) mit einem Rahmen-Erweiterungsabschnitt versehen ist, der sich von dem Rahmen-Seitenabschnitt in einer Querrichtung nach innen erstreckt,
wobei der erste nachgebende Abschnitt (150A) quer zu einem Grenzabschnitt zwischen dem Rahmen-Seitenabschnitt und dem Rahmen-Erweiterungsabschnitt ausgebildet ist, und
ein Abschnitt, der in dem Rahmen-Seitenabschnitt des ersten nachgebenden Abschnitts (150A) ausgebildet ist, sich von dem Grenzabschnitt (L) nach vorn erstreckt, und ein Abschnitt, der in dem Rahmen-Erweiterungsabschnitt des ersten nachgebenden Abschnitts ausgebildet ist, sich von dem Grenzabschnitt (L) in der Querrichtung nach innen erstreckt.

3. Fahrzeugsitz nach Anspruch 1 oder 2, wobei sowohl der erste nachgebende Abschnitt (150A) als auch der zweite nachgebende Abschnitt (150B) Einführungs-Löcher sind.

4. Fahrzeugsitz nach einem der Ansprüche 1 bis 3, wobei sowohl der erste nachgebende Abschnitt (150A) als auch der zweite nachgebende Abschnitt (150B) so ausgebildet sind, dass beide nachgebende Abschnitte an der gleichen Position in der vertikalen Richtung ausgebildet sind.

5. Fahrzeugsitz nach einem der Ansprüche 1 bis 4, wobei der zweite nachgebende Abschnitt (150B) ein Einführungs-Loch ist, in das das andere Element bei der Montage des Fahrzeugsitzes (S) eingeführt wird.

6. Fahrzeugsitz nach Anspruch 5, wobei der zweite nachgebende Abschnitt (150B) ein Einführungs-Loch ist, in das ein Befestigungswerkzeug zum Befestigen des Sitzlehnen-Rahmens (1) bei der Montage des Fahrzeugsitzes (S) eingeführt wird.

7. Fahrzeugsitz nach einem der Ansprüche 1 bis 6, wobei jeder eines Paars von Seiten-Rahmen, die sich an beiden Enden des Sitzlehnen-Rahmens (1) in der Querrichtung befinden, mit dem Rahmen-Seitenabschnitt und dem Rahmen-Erweiterungsabschnitt versehen ist, der sich von dem Rahmen-Seitenabschnitt in der Querrichtung nach innen erstreckt, und der Sitzlehnen-Rahmen (1) mit einem Verbindungs-Rahmen(18) versehen ist, der die Seiten-Rahmen miteinander verbindet,
wobei jedes der Enden des Verbindungs-Rahmens (18) in der Querrichtung entweder den Rahmen-Erweiterungsabschnitt oder den Rahmen-Seitenabschnitt überlappt, die an dem Seiten-Rahmen vorhanden sind, und
der erste nachgebende Abschnitt (150A) so ausgebildet ist, dass er einem Bereich des SeitenRahmens folgt, der den Verbindungs-Rahmen überlappt.

8. Fahrzeugsitz nach einem der Ansprüche 1 bis 7, wobei das Einführungs-Loch als der erste nachgebende Abschnitt (150A) so verformt wird, dass es in der vertikalen Richtung gequetscht wird, wenn eine Stoßlast von der Rückseite auf den Fahrzeugsitz (S) wirkt, und
zwei Bereiche, die einander parallel in der vertikalen Richtung an dem Rand zugewandt sind, miteinander in Kontakt kommen, wenn das Maß der Verformung des Einführungs-Lochs ein vorgegebenes Maß erreicht, um die weitere Verformung des Einführungs-Lochs zu regulieren.

## Revendications

1. Siège de véhicule (S) qui comprend une partie latérale d'armature disposée sur chacun des côtés droit et gauche d'une armature arrière de siège (1) et s'étendant vers le haut et vers le bas,
dans lequel la partie latérale d'armature est dotée d'une partie fragile (150) qui se déforme lorsqu'une charge d'impact lui est appliquée,
dans lequel la partie fragile (150) comprend une première partie fragile (150A) qui est formée pour s'étendre vers l'avant depuis l'extrémité arrière de la partie latérale d'armature, et une seconde partie fragile (150B) qui est formée à une position séparée de la première partie fragile (150A) dans la partie latérale d'armature, et
dans lequel la première partie fragile (150A) s'étend vers la position de formation de la seconde partie fragile (150B), la première partie fragile (150A) étant un trou de pénétration,
**caractérisé en ce que** le bord entourant le trou de pénétration utilisé comme première partie fragile (150A) est cintré vers l'intérieur de sorte à ce qu'une partie en forme de rebord soit formée.

2. Siège de véhicule (S) selon la revendication 1,
dans lequel l'armature arrière de siège (1) est dotée d'une partie formant extension d'armature qui s'étend vers l'intérieur dans la direction droite et gauche depuis la partie latérale d'armature,
dans lequel la première partie fragile (150A) est formée de part et d'autre d'une partie aux limites entre la partie latérale d'armature et la partie formant extension d'armature, et
dans lequel une partie qui est formée dans la partie latérale d'armature de la première partie fragile (150A) s'étend vers l'avant depuis la partie aux limites (L), et une partie qui est formée dans la partie formant extension d'armature de la première partie fragile s'étend vers l'intérieur dans la direction droite et gauche depuis la partie aux limites (L).

3. Siège de véhicule (S) selon la revendication 1 ou la revendication 2, dans lequel à la fois la première partie fragile (150A) et la seconde partie fragile (150B) sont des trous de pénétration.

4. Siège de véhicule (S) selon l'une quelconque des revendications 1 à 3, dans lequel à la fois la première partie fragile (150A) et la seconde partie fragile (150B) sont formées de sorte à ce que les deux parties fragiles soient formées à la même position dans la direction haut et bas.

5. Siège de véhicule (S) selon l'une quelconque des revendications 1 à 4, dans lequel la seconde partie fragile (150B) est un trou de pénétration dans lequel l'autre élément est inséré pendant l'assemblage du siège de véhicule (S).

6. Siège de véhicule (S) selon la revendication 5, dans lequel la seconde partie fragile (150B) est un trou de pénétration dans lequel un outil de fixation destiné à immobiliser l'armature arrière de siège (1) est inséré pendant l'assemblage du siège de véhicule (S).

7. Siège de véhicule (S) selon l'une quelconque des revendications 1 à 6, dans lequel chacune d'une paire d'armature latérale disposées aux deux extrémités de l'armature arrière de siège (1) dans la direction droite et gauche est dotée d'une partie latérale d'armature et de la partie formant extension d'armature s'étendant vers l'intérieur dans la direction droite et gauche à partir de la partie latérale d'armature, l'armature arrière de siège (1) étant dotée d'une armature de raccordement (18) reliant les armatures latérales l'une à l'autre,
dans lequel chacune des extrémités de l'armature de raccordement (18) dans la direction droite et gauche chevauche l'une ou l'autre de la partie formant extension d'armature et de la partie latérale d'armature disposée dans l'armature latérale, et
dans lequel la première partie fragile (150A) est formée pour suivre une zone de l'armature latérale qui chevauche l'armature de raccordement.

8. Siège de véhicule (S) selon l'une quelconque des revendications 1 à 7, dans lequel le trou de pénétration utilisé comme première partie fragile (150A) est déformé de sorte à être écrasé dans la direction haute et basse lorsqu'une charge d'impact est appliquée au siège de véhicule (S) depuis le côté arrière, et
dans lequel de zones se faisant face, parallèles dans la direction haute et basse dans le bord, entrent en contact l'une avec l'autre lorsque la valeur de déformation du trou de pénétration atteint une valeur prédéterminée, dans le but de contrôler une autre déformation du trou de pénétration.
